# DEMANDE DE BREVET EUROPEEN

(11) **EP 0 998 062 A1**
(43) Date de publication de la demande: **03.05.2000**
(21) Numéro de dépôt: 99402639.1
(22) Date de dépôt: 25.10.1999
(51) Int. Cl.: H04B 7/185

(54) **Dispositif de radiotéléphonie cellulaire utilisable à bord d'un vehicule de transport de passagers**

(30) Priorité: 28.10.1998 FR 9813534
(71) Demandeur: ALCATEL, 75008 Paris (FR)
(72) Inventeur: Rousseau, Jean-René, 95000 Neuville S/oise (FR); Criqui, Jean-François, 92600 Asnieres (FR)
(74) Mandataire: Sciaux, Edmond

(57) **Abrégé**

Ce dispositif permet d'utiliser des terminaux radiotéléphoniques classiques (TL1, TL2, ...), à bord d'un avion par exemple. Il comprend :
- une première station émettrice-réceptrice (T2) située à bord du véhicule et reliée à une antenne (AN1) située à l'extérieur de ce véhicule pour établir une liaison radio externe entre ce véhicule et un réseau radiotéléphonique terrestre (R1), via un satellite (S) ;
- et une seconde station émettrice-réceptrice (BSS1) ayant au moins une antenne (AN2) située à l'intérieur du véhicule, et étant reliée à un contrôleur de stations de base (BSC2) ; cette seconde station et ce contrôleur remplissant des fonctions analogues à celles remplies par un sous-système radio dans un réseau radiotéléphonique classique.

## Description

L'invention concerne un dispositif de radiotéléphonie cellulaire utilisable à bord d'un véhicule de transport de passagers, par exemple un avion, un train, un paquebot, etc....

Actuellement il n'est pas possible d'utiliser un terminal radiotéléphonique portatif à l'intérieur d'un avion, par exemple, comme on le ferait dans un lieu public quelconque, d'une part parce que c'est interdit, le signal rayonné ayant une puissance suffisante pour perturber les équipements électroniques situés à bord, et d'autre part parce qu'il faudrait pouvoir placer le terminal à proximité d'un hublot pour pouvoir communiquer avec un sous-système radio située à l'extérieur de la cabine de l'avion. Le service de téléphonie est disponible actuellement dans les avions par le biais de terminaux spécifiques, reliés chacun par un fil à un équipement fixe comportant une antenne placée à l'extérieur de l'avion. Cet équipement constitue une interface avec un système de télécommunication, par exemple un système comportant des satellites. La compagnie aérienne (offrant le service) doit prendre en charge les aspects de facturation des appels.

Le document WO 98/21838 décrit un système de radiotéléphonie cellulaire utilisable à bord d'un avion, permettant d'utiliser des terminaux portables GSM ou DCS classiques. Selon ce document, on relie chaque terminal portable GSM ou DCS à un premier dispositif de conversion électrique-optique par un court fil blindé. Ce dispositif dessert un petit groupe de passagers voisins. Ce premier dispositif de conversion transforme un signal à haute fréquence fourni par un terminal portable en un signal optique, et réciproquement.

Tous les premiers dispositifs de conversion sont reliés respectivement à une unité centrale par un réseau de fibres optiques. Cette unité centrale comporte des seconds dispositifs de conversion qui transforment un signal optique en un signal à haute fréquence, et réciproquement. Ce dispositif connu évite le rayonnement à haute fréquence que laisserait échapper un réseau de câbles blindés ayant une grande longueur. L'unité centrale est reliée à une station émettrice-réceptrice par de courts câbles blindés. Cette station possède une antenne placée à l'extérieur de l'avion, et elle relit l'avion à un réseau radiotéléphonique terrestre GSM ou DCS, via un réseau de satellites.

Cette unité centrale remplit des fonctions analogues à celles remplies par une station de base dans un réseau radiotéléphonique classique. Classiquement, une station de base est reliée à un contrôleur de stations de base. Dans le dispositif connu décrit dans ce document, les fonctions d'un contrôleur de stations de base ne sont pas remplies par l'unité centrale située à bord de l'avion, mais par un contrôleur situé au sol. Ce dispositif connu a pour inconvénients de nécessiter une liaison permanente, pour la transmission d'information de signalisation entre l'avion et le réseau radiotéléphonique au sol, exactement comme sur la liaison qui relie une station de base classique à un contrôleur classique de stations de base. Cette liaison permanente consomme des ressources du réseau.

Le but de l'invention est de proposer un système qui prolonge, dans les véhicules de transport de passagers, l'offre de téléphonie cellulaire des opérateurs mobiles classiques, en permettant aux passagers d'utiliser leurs terminaux portatifs standards sans devoir les connecter à un câble, en évitant à la compagnie de transport (offrant le service) de prendre en charge les aspects de facturation des appels, mais sans avoir les inconvénients de ce dispositif connu.

L'objet de l'invention est un dispositif de radiotéléphonie cellulaire utilisable à bord d'un véhicule de transport de passagers ; ce dispositif comportant :
- une première station émettrice-réceptrice située à bord du véhicule et reliée à une antenne située à l'extérieur de ce véhicule pour établir une liaison radio externe entre ce véhicule et un réseau radiotéléphonique terrestre ;
- et des moyens situés dans le véhicule, pour coupler des terminaux radiotéléphoniques portatifs situés à l'intérieur du véhicule, à la station émettrice-réceptrice ; ces moyens comportant au moins une seconde station émettrice-réceptrice ayant au moins une antenne située à l'intérieur du véhicule ;
**caractérisé** en ce que les moyens pour coupler comportent en outre un contrôleur de stations de base relié à chaque seconde station émettrice-réceptrice et relié à la première station ; ce contrôleur et cette seconde station émettrice-réceptrice remplissant des fonctions analogues à celles remplies par un sous-système radio dans un réseau radiotéléphonique classique.

Le dispositif ainsi caractérisé ne nécessite pas de liaison permanente pour la transmission d'information de signalisation entre l'avion et le réseau radiotéléphonique au sol, grâce à la présence d'un contrôleur de stations de base à bord. La liaison peut être interrompue s'il n'y a plus de communication en cours avec le sol, puis être rétablie lorsque quelqu'un demande à nouveau l'établissement d'une communication entre le véhicule et le sol.

Ce dispositif permet d'offrir un service de radiotéléphonie à tous les passagers qui sont abonnés chez un opérateur ayant signé un accord de mobilité avec l'opérateur exploitant le réseau sur lequel est raccordé le véhicule par la liaison radio externe. Les passagers sont ainsi considérés comme visiteurs de l'opérateur qui a un accord avec la compagnie de transport.

Le dispositif selon l'invention permet, aux compagnies de transport, d'offrir très simplement aux passagers d'un véhicule un service de téléphonie cellulaire classique, en s'affranchissant de tous les problèmes de facturation, ceux-ci étant résolus par les règles et principes d'inter fonctionnement classiquement en vigueur entre des réseaux cellulaires voisins exploités par différents opérateurs.

Avantages du dispositif selon l'invention :
1) Un déploiement rapide du service puisque la partie déportée d'une architecture cellulaire conforme à une norme existante (GSM par exemple) peut être reliée sans difficultés techniques aux infrastructure terrestres de tous les opérateurs de réseaux cellulaires déjà existants et répondants à cette norme.
2) Une mise en oeuvre simple puisqu'il est possible de réutiliser les principes classiques d'inter fonctionnement entre réseaux de différents opérateurs.
3) Ce dispositif peut être adapté à tout standard de radiotéléphonie utilisé à bord du véhicule : Par exemple, en utilisant un sous-système radio de type GSM pour des terminaux GSM, et ou en utilisant un sous-système radio de type CDMA pour des terminaux CDMA, etc ...
4) Ce dispositif permet d'utiliser des terminaux portatifs classiques sans risque de perturber les équipements électroniques situés à bord. En effet, les terminaux de radiotéléphonie cellulaire comportent toujours des moyens de régulation de la puissance d'émission, qui limitent la puissance émise de telle sorte qu'elle soit suffisante pour une bonne liaison, sans plus. Grâce à la station présente à bord du véhicule, et ayant une antenne à l'intérieur de ce véhicule, les moyens de régulation de chaque terminal portatif réduisent la puissance d'émission de ce terminal à une valeur très faible, et elle ne risque donc pas de perturber les équipements électroniques du véhicule.

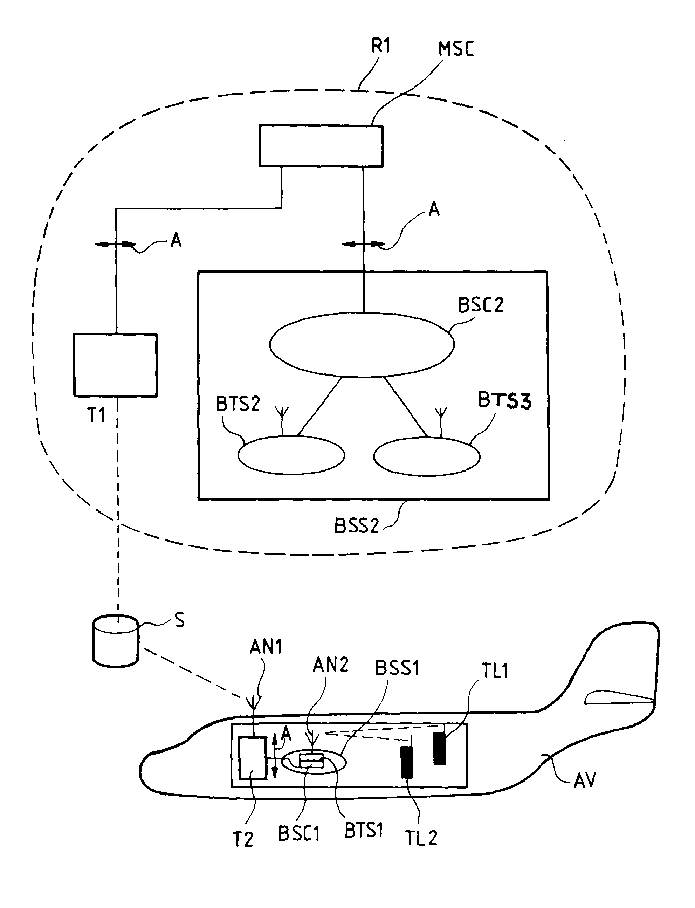

L'invention sera mieux comprise et d'autres caractéristiques apparaîtront à l'aide de la description ci-dessous et de la figure unique l'accompagnant. La figure représente un exemple de réalisation du dispositif selon l'invention, utilisé à bord d'un avion AV pour des terminaux de type GSM. Dans cet exemple de réalisation le dispositif comprend :
- un sous-système radio ("Base Station System" dans la terminologie anglaise du GSM), BSS1, analogue à un sous-système radio de type GSM utilisé couramment dans un réseau GSM terrestre ; ce sous-ensemble BSS1 étant placé à bord de l'avion AV;
- une antenne AN2 placée à l'intérieur de la cabine de l'avion, et reliée à ce sous-système BSS1, pour lui permettre de communiquer avec des terminaux portatifs GSM, TL1, TL2, ... utilisés par des passagers ;
- une station émettrice-réceptrice T2 capable de communiquer avec un satellite, placée à bord de l'avion, et reliée à une entrée-sortie du sous-système BSS1 ;
- une antenne AN1 placée à l'extérieur de l'avion AV et reliée à la station émettrice-réceptrice T2.

L'antenne AN1 permet une liaison radio bidirectionnelle avec un réseau de radiotéléphonie cellulaire terrestre de type GSM , R1, via un satellite S et une station terrestre T1. Le réseau R1 comprend une pluralité de sous-systèmes radio, notamment un sous-système BSS2 qui est représenté sur la figure à titre d'exemple. Le sous-système BSS2 comprend par exemple un contrôleur de stations de bases ("Base Station Controller"), BSC2, qui est relié :
- d'une part à un centre de commutation du service radio-mobile ("Mobile-service Switching Center") MSC, en respectant l'interface dite A dans la terminologie du GSM ;
- et d'autre part à deux équipements de transmission ("Base transceiver station") BTS1 et BTS2.

Le sous-système radio BSS1 placé à bord est analogue à un sous-système radio GSM classique, tel que le sous-système radio BSS2, sauf qu'il est simplifié parce qu'il nécessite moins de puissance d'émission et une capacité plus faible en nombre de terminaux mobiles desservis. Il comprend donc un contrôleur de station de base BSC1 et un équipement de transmission BTS1, ce dernier étant relié à l'antenne AN2. Le contrôleur BSC1 est relié à la station T2 en respectant l'interface A.

Le sous-système BSS1 comporte des moyens pour permettre aux terminaux radiotéléphoniques portatifs TL1, TL2,... situés à l'intérieur de l'avion AV d'émettre et de recevoir des données. Il comporte en outre des moyens pour permettre à ces terminaux TL1, TL2,... d'établir des communications entre eux.

La station T2, l'antenne AN2, et la station terrestre T1 peuvent être analogues à celles utilisées actuellement pour le service de téléphonie à bord des avions. Selon le trafic envisagé, le lien entre l'avion AV et le réseau R1 peut être un lien numérique du type synchrone (par multiple ou sous multiple d'un débit de 2 Mb/s) ou du type transmission en mode paquet. La station terrienne T1 est reliée au centre de commutation MSC en respectant l'interface A. Selon un mode de réalisation, cette interface A peut être mise en oeuvre sur une liaison utilisant le protocole Internet.

## Revendications

1. Dispositif de radiotéléphonie cellulaire utilisable à bord d'un véhicule de transport de passagers (AV) ; ce dispositif comportant :
- une première station émettrice-réceptrice (T2) située à bord du véhicule et reliée à une antenne (AN1) située à l'extérieur de ce véhicule pour établir une liaison radio externe entre ce véhicule et un réseau radiotéléphonique terrestre (R1) ;
- et des moyens (BSS1, AN2), situés dans le véhicule, pour coupler des terminaux radiotéléphoniques portatifs (TL1, TL2) situé à l'intérieur du véhicule, à la station émettrice-réceptrice (T2) ; ces moyens comportant au moins une seconde station émettrice-réceptrice (BSS1) ayant au moins une antenne (AN2) située à l'intérieur du véhicule ;
**caractérisé** en ce que les moyens pour coupler comportent en outre un contrôleur de stations de base (BSC2) relié à chaque seconde station émettrice-réceptrice (BSS1) et relié à la première station (T2) ; ce contrôleur (BSC2) et cette seconde station émettrice-réceptrice (BSS1) remplissant des fonctions analogues à celles remplies par un sous-système radio dans un réseau radiotéléphonique classique.

2. Système selon la revendication 1, caractérisé en ce que la liaison radio externe est relayée par au moins un satellite (S).

3. Système selon la revendication 1, caractérisé en ce qu'une seconde station émettrice-réceptrice (BSS1) comporte des moyens pour permettre aux terminaux radiotéléphoniques portatifs (TL1, TL2) situés à l'intérieur du véhicule d'émettre et de recevoir des données.

4. Système selon la revendication 1, caractérisé en ce qu'une seconde station émettrice-réceptrice (BSS1) comporte des moyens pour permettre aux terminaux radiotéléphoniques portatifs (TL1, TL2) situés à l'intérieur du véhicule d'établir des communications entre eux.
